# EUROPÄISCHE PATENTANMELDUNG

(11) **EP 3 340 195 A1**
(43) Veröffentlichungstag der Anmeldung: **27.06.2018**
(21) Anmeldenummer: 16206669.0
(22) Anmeldetag: 23.12.2016
(51) Int. Cl.: G07F 13/06, G07F 17/00, G07F 7/10, G06Q 20/32, A47J 31/40, A47J 31/44, G07F 9/02

(54) **VERFAHREN ZUM BETRIEB EINER GETRÄNKEZUBEREITUNGSMASCHINE, GETRÄNKEZUBEREITUNGSMASCHINE UND VERFAHREN ZUM BETRIEB EINES BEDIENGERÄTES**

(71) Anmelder: Qbo Coffee GmbH, 8304 Wallisellen (CH)
(72) Erfinder: HARTMANN, Doreen, 02827 Görlitz (DE); LEE, Hosun, 22763 Hamburg (DE)
(74) Vertreter: Frei Patent Attorneys

(57) **Zusammenfassung**

Ein Verfahren zum Betrieb einer Getränkezubereitungsmaschine (1), zur Herstellung eines Gesamtproduktes unter Verwendung einer Portionspackung (3), weist die folgenden durch die Getränkezubereitungsmaschine (1) ausgeführten Schritte auf:
**•** einen Empfangsschritt (61) zum Empfangen, durch eine drahtlose Kommunikationseinheit (15), eines Auslösebefehls;
**•** einen Überprüfungsschritt (62) zum Überprüfen, ob die Getränkezubereitungsmaschine (1) zum Herstellen des Gesamtproduktes bereit ist;
und, falls die Getränkezubereitungsmaschine (1) zum Herstellen des Gesamtproduktes **bereit** ist:
**•** einen Bestätigungsschritt (64) zum Senden, durch die Kommunikationseinheit (15), einer Bestätigung, dass der Auslösebefehl empfangen wurde und die Getränkezubereitungsmaschine (1) zum Herstellen des Gesamtproduktes bereit ist;
**•** einen Herstellungsschritt (65) zum Herstellen des Gesamtproduktes.

## Beschreibung

Die Erfindung betrifft Getränkezubereitungsmaschinen zum Zubereiten von Getränken oder dergleichen aus einer Portionspackung mit einer Portionsverpackung (bspw. Kapsel) und einem in der Portionsverpackung enthaltenen Extraktionsgut (bspw. Kaffee). Sie betrifft insbesondere ein Verfahren zum Betrieb einer Getränkezubereitungsmaschine, eine Getränkezubereitungsmaschine und ein Verfahren zum Betrieb eines Bediengerätes.

Getränkezubereitungsmaschinen zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapsel ausgebildet, in denen das Extraktionsgut bspw. luftdicht abgeschlossen ist. Für die Extraktion wird die Kapsel in einer Kapselaufnahme platziert und angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul.

Neben einem Brühmodul können eine oder mehrere weitere Einheiten zum Fördern und Beifügen einer weiteren Getränkekomponente wie beispielsweise Milch vorliegen. So kann die Getränkezubereitungsmaschine ein Getränk oder allgemein gesprochen ein Gesamtprodukt aus zwei Teilprodukten herstellen.

Die europäische Patentanmeldung Nr. 15 194 735 beschreibt ein Verfahren zum Betrieb einer Getränkezubereitungsmaschine zum Herstellen eines Produktes aus mehreren Teilprodukten, wobei Mengenanteile der Teilprodukte durch einen Benutzer auf einer grafischen Anzeige der Mengenanteile angepasst werden können.

Die europäische Patentanmeldung Nr. 15 194 667 beschreibt ein Verfahren zum Betrieb einer Getränkezubereitungsmaschine unter Verwendung von Zubereitungsparametern, die anhand eines Portionencodes einer Portionspackung bestimmt werden. Dabei sind einzelne Zubereitungsparameter durch einen Benutzer anpassbar.

In den oben genannten Patentanmeldungen ist unter anderem die Option einer Kommunikation der Getränkezubereitungsmaschine mit einem Bediengerät beschrieben, welches mobil und tragbar sein kann, beispielsweise ein Mobiltelefon oder Smartphone. Mit dem Bediengerät können Zubereitungsvorschriften oder Rezepte an die Getränkezubereitungsmaschine übermittelt werden, oder Zubereitungsvorschriften, welche in der Getränkezubereitungsmaschine gespeichert sind, können modifiziert werden. Es ist vorgesehen, dass die Zubereitung durch einen Bedienschritt ausgelöst wird, der durch den Benutzer an der Getränkezubereitungsmaschine selber ausgeführt wird.

Es ist eine mögliche Aufgabe der Erfindung, eine für einen Benutzer bequeme und gleichzeitig sichere Bedienung der Getränkezubereitungsmaschine zu realisieren, und ein entsprechendes Verfahren zum Betrieb einer Getränkezubereitungsmaschine, eine Getränkezubereitungsmaschine und ein Computerprogramm zu schaffen, welche diese Realisierung ermöglichen.

Es ist eine weitere mögliche Aufgabe der Erfindung, einem Benutzer die Bedienung einer Getränkezubereitungsmaschine zu erleichtern.

Diese Aufgabe lösen ein Verfahren zum Betrieb einer Getränkezubereitungsmaschine, eine Getränkezubereitungsmaschine und ein Verfahren und Computerprogramm gemäss den Patentansprüchen.

Das **Verfahren** zum Betrieb einer Getränkezubereitungsmaschine dient zur Herstellung eines Gesamtproduktes unter Verwendung einer Portionspackung. Dabei weist die Getränkezubereitungsmaschine eine zur drahtlosen Kommunikation ausgebildete Kommunikationseinheit auf. Das Verfahren weist die folgenden durch die Getränkezubereitungsmaschine ausgeführten Schritte auf:
- einen Empfangsschritt zum Empfangen, durch die Kommunikationseinheit, eines Auslösebefehls;
- einen Überprüfungsschritt zum Überprüfen, ob die Getränkezubereitungsmaschine zum Herstellen des Gesamtproduktes bereit ist;
und, falls die Getränkezubereitungsmaschine zum Herstellen des Gesamtproduktes bereit ist:
- einen Bestätigungsschritt zum Senden, durch die Kommunikationseinheit, einer Bestätigung, dass der Auslösebefehl empfangen wurde und die Getränkezubereitungsmaschine zum Herstellen des Gesamtproduktes bereit ist;
- einen Herstellungsschritt zum Herstellen des Gesamtproduktes.

Der im Empfangsschritt empfangene Auslösebefehl kann von einem Bediengerät welches von der Getränkezubereitungsmaschine getrennt ist, über eine drahtlose Kommunikationsverbindung gesendet werden. Das Bediengerät kann ein Mobiltelefon oder Smartphone oder ein anders gearteter tragbares Gerät mit Eingabemitteln und Ausgabemitteln sein, beispielsweise einem grafischen Userinterface und mit mechanischen Tasten und/oder einem Touchscreen.

Der Auslösebefehl kann eine einzelne Nachricht sein, die vom Bediengerät an die Getränkezubereitungsmaschine respektive deren Kommunikationseinheit übermittelt wird. Dabei kann der Auslösebefehl verschlüsselt übermittelt werden. Dies kann mit einem gleichbleibender Schlüssel oder mit einem wechselnden Schlüssel, beispielsweise einem rotierenden Schlüssel, geschehen.

Der Auslösebefehl kann alternativ auch durch einen bidirektionalen Austausch von mehreren Nachrichten zwischen Bediengerät und Getränkezubereitungsmaschine respektive deren Kommunikationseinheit übermittelt werden. Dabei kann ein kryptographisches Protokoll verwendet werden, mit welchem eine Authentifizierung des Bediengerätes und/oder des Benutzers durchgeführt wird, und nur nach erfolgreicher Authentifizierung der Auslösebefehl akzeptiert wird und die weiteren Schritte nach dem Empfangsschritt ausgeführt werden.

Es kann, wie oben beschrieben, zuerst der Bestätigungsschritt und dann der Herstellungsschritt ausgeführt werden, oder diese beiden Schritte können in der umgekehrten Reihenfolge, oder gleichzeitig ausgeführt werden.

Die Portionspackung kann eine Kapsel sein. Diese kann mit einem Extraktionsgut gefüllt sein, beispielsweise mit Kaffee.

Das Gesamtprodukt kann aus einem oder mehreren Teilprodukten bestehen. Wenn das Gesamtprodukt eine Kaffeevariante ist, können die Teilprodukte Kaffee, Milch, Milchschaum, Zucker etc. sein. Diese wiederum werden aus Komponenten wie Wasser, Portionspackung mit Extraktionsgut (Kaffeepulver), Milch etc. hergestellt.

In Ausführungsformen weist der Überprüfungsschritt einen oder mehreren der folgenden Unter-Überprüfungsschritte zur Überprüfung des **Vorhandenseins von Komponenten** des Gesamtproduktes auf:
- Überprüfen, ob eine Portionspackung vorhanden ist;
- Überprüfen, ob eine Portionspackung *zur Herstellung des Gesamtproduktes* vorhanden ist;
- Überprüfen, ob eine Mindestmenge von Wasser vorhanden ist;
- Überprüfen, ob eine ausreichende Menge von Wasser zur Herstellung eines Getränkes als Gesamtprodukt vorhanden ist.

Mit der Überprüfung, ob eine Portionspackung vorhanden ist, kann kontrolliert werden, ob überhaupt eine Portionspackung vorliegt. Dass eine Portionspackung vorliegt, kann bedeuten, dass eine Portionspackung in einer Grundeinheit der Getränkezubereitungsmaschine in beispielsweise eine Kapselaufnahme eingesetzt ist, in welcher eine Extraktion zur Herstellung mindestens einer Komponente des Gesamtproduktes stattfindet. Alternativ kann es bedeuten, dass eine Portionspackung in einer Zuführung der Getränkezubereitungsmaschine eingesetzt ist, aus welcher sie automatisch in die Kapselaufnahme gefördert werden kann.

Das Überprüfen des Vorhandenseins einer Portionspackung geschieht beispielsweise mit einem Präsenzdetektor, oder mit einer Kapselerkennung, wie sie in WO 2016/087190 beschrieben ist.

Mit der Überprüfung, ob eine Portionspackung *zur Herstellung des Gesamtproduktes,* vorhanden ist kann kontrolliert werden, ob eine Portionspackung der richtigen Kategorie vorliegt. Beispielsweise darf, wenn ein Getränke hergestellt werden soll, nicht eine Reinigungskapsel vorliegen. Dies hat den Vorteil, dass das Herstellungsverfahren abgebrochen und der Benutzer informiert werden kann, wenn die Herstellung des Gesamtproduktes nicht möglich ist.

In Ausführungsformen weist der Überprüfungsschritt einen oder mehreren der folgenden Unter-Überprüfungsschritte auf:
- Überprüfen, ob eine Zusatzeinheit zum Zuführen eines Teilproduktes, insbesondere Milch, zum Gesamtprodukt, an die Getränkezubereitungsmaschine angeschlossen und betriebsbereit ist;
- Überprüfen, ob eine ausreichende Menge des Teilproduktes, insbesondere Milch, vorhanden ist. Diese "ausreichende Menge" kann eine Mindestmenge sein, die unabhängig vom herzustellenden Gesamtprodukt ist, oder kann von dieser abhängig sein.

Damit kann, falls die Getränkezubereitungsmaschine eine entfernbare Zusatzeinheit aufweist, deren Vorhandensein und/oder Betriebsbereitschaft, kontrolliert werden. Dies hat den Vorteil, dass bei einer konfigurierbaren Getränkezubereitungsmaschine mit einer oder mehreren optionalen Zusatzeinheiten die Herstellbarkeit des Gesamtproduktes überprüft werden kann.

Das Überprüfen des Vorhandenseins einer Zusatzeinheit kann geschehen wie in WO 2016/046237, WO 2016/046238, WO 2016/046239 und/oder WO 2016/046240 beschrieben.

In Ausführungsformen wird dieser Überprüfungsschritt bezüglich der Zusatzeinheit nur dann durchgeführt, wenn eine **Zubereitungsvorschrift,** auf welche der Auslösebefehl sich bezieht, erfordert, dass die Zusatzeinheit vorliegt.

In Ausführungsformen weist der Überprüfungsschritt einen oder mehreren der folgenden Unter-Übeiprüfungsschritte zur **Überprüfung eines Betriebszustandes** der Getränkezubereitungsmaschine auf:
- Überprüfen, ob die Getränkezubereitungsmaschine zur Herstellung des Gesamtproduktes bereit ist;
- Überprüfen, ob keine Fehlermeldungen der Getränkezubereitungsmaschine vorliegen;
- Überprüfen, ob ein Behälter zur Aufnahme des Gesamtproduktes vorhanden ist;
- Überprüfen, ob ein Volumen des Behälters mit der Zubereitungsvorschrift kompatibel ist.

Dieser Überprüfungsschritt kann auch eine Zusatzeinheit der Getränkezubereitungsmaschine überprüfen. In weiteren Ausführungsformen können auch Betriebsparameter der Getränkezubereitungsmaschine oder einer Zusatzeinheit überprüft werden, beispielsweise eine Temperatur eines Behälters, ein Füllstand eines Behälters, etc.

Das Überprüfen, ob die Getränkezubereitungsmaschine zur Herstellung des Gesamtproduktes bereit ist, kann eine Überprüfung beinhalten, ob nicht ein Entkalkungszyklus oder ein Reinigungsprogramm ausgeführt wird, ob die Getränkezubereitungsmaschine nicht bereits zur Herstellung eines Produktes in Betrieb ist, etc.

Das Überprüfen, ob die Getränkezubereitungsmaschine zur Herstellung des Gesamtproduktes bereit ist, kann eine Überprüfung beinhalten, ob das letzte Herstellen des Gesamtproduktes durch einen mittels der Kommunikationseinheit empfangenen Auslösebefehl ausgelöst wurde, und ob seither durch den Benutzer keine Handlung an der Getränkezubereitungsmaschine selber vorgenommen worden ist. Die Getränkezubereitungsmaschine führt einen drahtlos empfangenen Auslösebefehl also nur dann aus, wenn seit dem letzten drahtlos empfangenen Auslösebefehl mindestens eine Handlung durch den Benutzer an der Getränkezubereitungsmaschine selber vorgenommen worden ist. Damit kann verhindert werden, dass wiederholt eine Herstellung ausgelöst wird - ob versehentlich oder böswillig - ohne dass ein Benutzer Gelegenheit hat, dies festzustellen.

Eine solche Handlung kann ganz einfach das Einsetzen einer neuen Kapsel sein oder das manuelle Ausstossen der gebrauchten Kapsel, oder eine Handlung an der physischen Bedieneinheit der Maschine. Falls eine automatische Detektion eines Behälters vorliegt, kann auch damit ein Hinstellen oder Entfernen eines Behälters als Handlung an der Getränkezubereitungsmaschine detektiert werden.

Das Überprüfen, ob keine Fehlermeldungen der Getränkezubereitungsmaschine vorliegen, kann eine Überprüfung beinhalten, ob ein Kapselbehälter zur Aufnahme gebrauchter Portionspackungen voll ist, ob eine Tropfschale voll ist, ob — falls vorhanden - ein Hebel einer manuell bedienten Getränkezubereitungsmaschine in einer geöffneten Stellung ist, ob eine motorisch angetriebene Einheit, beispielsweise eine Brüheinheit, verklemmt ist, etc.

Das Überprüfen, ob ein Behälter zur Aufnahme des Gesamtproduktes vorhanden ist, kann eine Überprüfung beinhalten, ob der Behälter unter einem Auslass einer Zuführung zum Füllen des Behälters angeordnet ist. Dies kann mit einem oder mehreren sich ergänzenden Sensoren der folgenden Art geschehen: einem Infrarotsensor, einem Ultraschallsensor, einer Lichtschranke, einer Gewichtsmessung, etc.

Das Überprüfen, ob ein Volumen des Behälters mit der Zubereitungsvorschrift kompatibel ist, kann eine Überprüfung beinhalten, ob das Volumen grösser oder gleich der gemäss der Zubereitungsvorschrift zu erzeugenden Menge des Gesamtproduktes ist. Dabei kann eine Bestimmung des Volumens des Behälters beispielsweise geschehen, indem einer oder mehrere standardisierte Behälter verschiedenen Typs definiert sind, und der Typ eines Behälters anhand einer Eigenschaft des Behälters automatisch bestimmbar ist, welche den Typ eindeutig bestimmt. Diese Eigenschaft kann eine Höhe oder ein Leergewicht des Behälters sein, oder eine Kombination derselben. Die Eigenschaft kann auch durch einen optisch oder drahtlos erkennbaren Identifikator am Behälter definiert sein.

In Ausführungsformen weist der Überprüfungsschritt einen oder mehreren der folgenden Unter-Überprüfungsschritte **nach Massgabe einer Zubereitungsvorschrift,** auf welche der Auslösebefehl sich bezieht, auf:
- Überprüfen, ob eine Identität oder eine Kategorie einer Portionspackung, welche in der Getränkezubereitungsmaschine zur Herstellung des Gesamtproduktes bereit steht, konsistent mit der Zubereitungsvorschrift ist;
- Überprüfen, für mindestens eine Komponente des Gesamtproduktes, ob eine ausreichende Menge dieser Komponente zur Herstellung des Gesamtproduktes nach Massgabe der Zubereitungsvorschrift vorhanden ist.

Diese Zubereitungsvorschrift, auf welche der Auslösebefehl sich bezieht, kann zusammen mit oder zeitnah vor oder nach dem Auslösebefehl in der Getränkezubereitungsmaschine empfangen werden. Die Zubereitungsvorschrift und der Auslösebefehl können einander zugeordnet sein, beispielsweise durch eine gemeinsame Identifikationsinformation oder durch einen im Auslösebefehl enthaltenen Verweis auf die Zubereitungsvorschrift.

Die Zubereitungsvorschrift kann eine Kategorie einer Portionspackung spezifizieren, beispielsweise einen bestimmten Typ von Kaffee (beispielsweise "Espresso" oder "Kaffee") und zusätzlich auch eine Identität innerhalb einer Kategorie, beispielsweise eine bestimmte Kaffeemischung.

In Ausführungsformen wird, falls die Identität oder die Kategorie der Portionspackung nicht konsistent mit der Zubereitungsvorschrift ist, eine entsprechende Meldung über die Kommunikationseinheit gesendet. Damit kann am Bediengerät nach Empfang dieser Meldung eine entsprechende Anzeige angezeigt werden. Zudem kann der Benutzer mittels einer Anzeige am Bediengerät aufgefordert werden, entweder die Herstellung trotz der Inkonsistenz zu bestätigen oder die Zubereitungsvorschrift anzupassen, oder die Portionspackung auszutauschen.

In Ausführungsformen weist das Verfahren die folgenden durch die Getränkezubereitungsmaschine ausgeführten Schritte auf, falls die Getränkezubereitungsmaschine **nicht** zum Herstellen des Gesamtproduktes bereit ist:
- einen Fehlerinformationsschritt zum Senden, durch die Kommunikationseinheit, einer Fehlerinformation, dass der Auslösebefehl empfangen wurde und die Getränkezubereitungsmaschine zum Herstellen des Gesamtproduktes **nicht** bereit ist.

In Ausführungsformen weisen die Fehlerinformation Informationen über die Art des Fehlers auf, die anhand eines Ergebnisses des Überprüfungsschritts bestimmt sind.

Je nach Art der Fehlerinformation kann, gemäss Ausführungsformen:
- am Bediengerät angezeigt werden, dass ein Fehler vorliegt und die Herstellung nicht durchgeführt wird ("Fehler verhindert Herstellung"); und/oder
- am Bediengerät Information über die Art des Fehlers angezeigt werden ("falsche Kapsel eingelegt"); und/oder
- am Bediengerät eine Aufforderung zur Fehlerbehebung angezeigt werden ("Kapsel austauschen durch Kapsel der Sorte XY").

Solche Informationen können alternativ oder zusätzlich auch an einer Bedieneinheit der Getränkezubereitungsmaschine angezeigt werden.

In Ausführungsformen wird der Herstellungsschritt mit einer (insbesondere durch einen Benutzer an einem Bediengerät) vorgebbaren zeitlichen Verzögerung ausgeführt, insbesondere mit einer zeitlichen Verzögerung, die durch eine über die Kommunikationseinheit empfangene Nachricht spezifiziert ist.

Die zeitliche Verzögerung kann sich auf den Zeitpunkt des Empfangs des Auslösebefehls beziehen. Er kann sich alternativ auch auf einen anderen Zeitpunkt im Ablauf des Verfahrens, beispielsweise auf den Zeitpunkt des Sendens der Bestätigung, oder auf den Zeitpunkt eines Abschlusses des Überprüfungsschrittes, beziehen.

Die zeitliche Verzögerung kann durch Angabe einer absoluten Zeit, also einer Uhrzeit, oder einer relativen Zeit ("in zehn Minuten") relativ zum Zeitpunkt des dem Empfangsschritts oder dem Bestätigungsschritts geschehen. Die zeitliche Verzögerung kann als Teil des Auslösebefehls spezifiziert sein, oder in einer separaten Nachricht. Diese separate Nachricht wiederum kann vor oder nach dem Empfangsschritt empfangen werden.

Damit kann die Herstellung zu einem vom Benutzer gewünschten späteren Zeitpunkt ausgelöst werden.

In Ausführungsformen weist das Verfahren als weiteren Schritt auf: einen Abschlussbestätigungsschritt zum Senden, durch die Kommunikationseinheit, einer Abschlussbestätigung, dass das Herstellen des Gesamtproduktes abgeschlossen ist. Damit kann einem Benutzer durch das Bediengerät nach Empfang der Abschlussbestätigung angezeigt werden, dass das Gesamtprodukt zur Konsumation bereit steht.

In Ausführungsformen weist das Verfahren als weiteren Schritt auf: einen Herstellungsfehlermeldungsschritt zum Senden, durch die Kommunikationseinheit, einer Herstellungsfehlermeldung, dass beim Herstellen des Gesamtproduktes ein Fehler aufgetreten ist. Damit kann einem Benutzer durch das Bediengerät nach Empfang der Herstellungsfehlermeldung angezeigt werden, dass ein Fehler aufgetreten ist. Es können anschliessend Anweisungen zur Diagnose und/oder Behebung des Fehlers am Bediengerät und/oder an einer Bedieneinheit der Getränkezubereitungsmaschine angezeigt werden.

In Ausführungsformen weist das Verfahren die folgenden durch die Getränkezubereitungsmaschine ausgeführten Schritte auf:
- Speichern einer **Zubereitungsvorschrift,** auf welche der Auslösebefehl sich bezieht, in der Getränkezubereitungsmaschine;
- Herstellen des Gesamtproduktes gemäss dieser gespeicherten **Zubereitungsvorschrift** zu einem späteren Zeitpunkt, insbesondere nach Empfang einer Fehlerbehebungsmeldung in der Getränkezubereitungsmaschine.

Damit kann nach einer Fehlerbehebung die Zubereitung erneut ausgelöst werden, ohne dass dazu die Zubereitungsvorschrift (also ein Rezept) erneut der Getränkezubereitungsmaschine übermittelt werden muss.

Die Fehlerbehebungsmeldung kann über das Bediengerät und die Kommunikationseinheit empfangen werden, oder aber auch durch eine Bedieneinheit der Getränkezubereitungsmaschine. Die Fehlerbehebungsmeldung kann durch das Bediengerät respektive die Bedieneinheit ausgelöst werden, nachdem eine entsprechende Benutzereingabe stattgefunden hat. Typischerweise kann anschliessend an den Empfang der Fehlerbehebungsmeldung der Überprüfungsschritt erneut durchgeführt werden. Es kann auch der Überprüfungsschritt, insbesondere jener, der zum Fehlerinformationsschritt geführt hat, periodisch wiederholt werden, so dass nach Beheben des Fehlers durch den Benutzer die Fehlerbehebungsmeldung ohne weitere Eingabe des Benutzers automatisch ausgelöst wird.

In Ausführungsformen weist das Verfahren die folgenden durch die Getränkezubereitungsmaschine ausgeführten Schritte auf:
- Speichern einer **Zubereitungsvorschrift,** auf welche der Auslösebefehl sich bezieht, in der Getränkezubereitungsmaschine;
- einen Empfang einer **abgeänderten Zubereitungsvorschrift,** oder einen Empfang von Daten, welche Änderungen der gespeicherten Zubereitungsvorschrift beschreiben und damit eine abgeänderte Zubereitungsvorschrift definieren;
- eine erneute Durchführung des Empfangsschrittes und Überprüfungsschrittes unter Berücksichtigung der **abgeänderten Zubereitungsvorschrift;** und
falls die Getränkezubereitungsmaschine zum Herstellen des Gesamtproduktes bereit ist;
- des Bestätigungsschrittes und
- des Herstellungsschrittes.

Damit ist es einem Benutzer möglich, nach einer Fehlerbehebungsmeldung die Zubereitungsvorschrift abzuändern - zum Beispiel, weil sie inkonsistent mit der Identität oder Kategorie der Portionspackung ist - und die Zubereitung erneut auszulösen. Daten, welche Änderungen der gespeicherten Zubereitungsvorschrift beschreiben, sind beispielsweise einzelne Parameter, welche entsprechende Parameter der gespeicherten Zubereitungsvorschrift ersetzen.

In Ausführungsformen weist das Verfahren die folgenden vor dem Empfangsschritt ausgeführten Schritte auf:
- Eingabe eines Auslöseentscheides durch einen Benutzer;
- Anzeigen einer Widerrufsoption am Bediengerät, insbesondere während einer vorgegebenen Zeitdauer;
- Falls ein Widerrufentscheid durch den Benutzer eingegeben wird, Abbruch des Verfahrens; oder, falls kein Widerrufentscheid durch den Benutzer eingegeben wird, Weiterführung des Verfahrens.

Diese Weiterführung des Verfahrens führt also zur Übermittlung des Auslösebefehls vom Bediengerät und zum Empfangen des Auslösebefehls durch die Kommunikationseinheit, und den weiteren Schritten: Überprüfungsschritt, sowie Bestätigungsschritt und Herstellungsschritt respektive Fehlerinformationsschritt, etc. Der Überprüfungsschritt kann bereits während dem Anzeigen einer Widerrufsoption am Bediengerät durchgeführt werden.

Der Auslöseentscheid ist also eine Benutzereingabe, typischerweise am Bediengerät. Dieser führt gemäss diesen Ausführungsformen also nicht unmittelbar zum Senden des Auslösebefehls an die Getränkezubereitungsmaschine, sondern erst nach Anzeige der Widerrufsoption und insbesondere nach Ablauf der vorgegebenen Zeitdauer.

Mit der Widerrufsoption wird einem Benutzer - während einer begrenzten Zeitdauer - die Gelegenheit gegeben, die Herstellung zu stoppen. Im Gegensatz zu einer Bestätigungsanfrage (wie "wollen Sie die Herstellung wirklich auslösen"), die vom Benutzer aktiv quittiert werden muss, ist hier im Normalfall keine weitere Aktion des Benutzers erforderlich.

Die **Getränkezubereitungsmaschine** ist ausgebildet, insbesondere programmiert, zur Ausführung des Verfahrens gemäss einem der vorangehenden Ansprüche.

Das **Verfahren** zum Betrieb eines **Bediengerätes** zur Interaktion mit einem Benutzer und zur drahtlosen Kommunikation mit einer Getränkezubereitungsmaschine, weist die folgenden durch das Bediengerät ausgeführten Schritte auf:
- Senden eines Auslösebefehls falls ein Benutzer am Bediengerät eine Eingabe eines Auslöseentscheides vornimmt;
- Empfangen einer Bestätigung, dass der Auslösebefehl empfangen wurde, mit einer Information, ob die Getränkezubereitungsmaschine zum Herstellen eines Gesamtproduktes bereit ist;
- Anzeige einer Bestätigungsanzeige am Bediengerät, nach Massgabe der empfangenen Bestätigung.

In Ausfühnungsformen weist das Verfahren die folgenden durch das Bediengerät ausgeführten Schritte auf:
- Empfangen einer Fehlerinformation;
- Anzeige einer Fehleranzeige am Bediengerät, nach Massgabe der empfangenen Fehlerinformation.

In Ausführungsformen weist das Verfahren die folgenden durch das Bediengerät ausgeführten Schritte auf:
- Senden einer Nachricht, welche eine zeitliche Verzögerung zur Ausführung eines Herstellungsschrittes spezifiziert.

In Ausführungsformen weist das Verfahren die folgenden durch das Bediengerät ausgeführten Schritte auf:
- Empfangen einer Abschlussbestätigung;
- Anzeige einer Abschlussbestätigungsanzeige am Bediengerät, dass das Herstellen des Gesamtproduktes abgeschlossen ist.

In Ausführungsformen weist das Verfahren die folgenden durch das Bediengerät ausgeführten Schritte auf:
- Empfangen einer Herstellungsfehlermeldung;
- Anzeige einer Herstellungsfehleranzeige am Bediengerät, dass beim Herstellen des Gesamtproduktes ein Fehler aufgetreten ist.

In Ausführungsformen weist das Verfahren den folgenden durch das Bediengerät ausgeführten Schritt auf:
- Senden einer abgeänderten Zubereitungsvorschrift, oder Senden von Daten, welche Änderungen einer Zubereitungsvorschrift beschreiben und damit eine abgeänderte Zubereitungsvorschrift definieren.

In Ausführungsformen weist das Verfahren die folgenden durch das Bediengerät ausgeführten Schritte auf:
- Eingabe eines Auslöseentscheides durch einen Benutzer;
- Anzeigen einer Widerrufsoption am Bediengerät;
- Falls ein Widerrufentscheid durch den Benutzer eingegeben wird, Abbruch des Verfahrens; oder, falls kein Widerrufentscheid durch den Benutzer eingegeben wird, Weiterführung des Verfahrens.

Das **Computerprogramm** dient zum Betrieb eines **Bediengerätes** zur Interaktion mit einem Benutzer und zur drahtlosen Kommunikation mit einer Getränkezubereitungsmaschine, wobei das Computerprogramm bei Ausführung auf dem Bediengerät das beschriebene Verfahren ausführt.

Das Bediengerät weist eine Eingabevorrichtung und eine Ausgabevorrichtung auf, die als Touchscreen kombiniert sein können, sowie eine Datenverarbeitungseinheit und eine Kommunikationseinheit zur Kommunikation mit der Getränkezubereitungsmaschine. Das Bediengerät kann ein **mobiles, insbesondere ein tragbares** Gerät sein, beispielsweise ein Mobiltelefon oder Smartphone, oder ein funktional gleichwertiges Gerät wie eine Smartwatch oder ein "wearable computer". Das Bediengerät kann auch fest installiert sein, beispielsweise als Teil einer Gebäude-oder Küchenautomatisierungsanlage. Dank dem Bediengerät können Bedienungselemente, insbesondere die Eingabevorrichtung und Ausgabevorrichtung des Bediengerätes, und dessen Programmierbarkeit und Rechenleistung zur Ansteuerung der Getränkezubereitungsmaschine genutzt werden.

Das Bediengerät kann zur Ausführung mindestens eines Teiles des beschriebenen Verfahrens ausgebildet sein. Das Bediengerät kommuniziert über eine Kommunikationsverbindung mit der Getränkezubereitungsmaschine. Dabei werden typischerweise Daten an die Getränkezubereitungsmaschine übertragen, welche repräsentativ sind für eine Behälterauswahl oder ein Gesamtvolumen, absolute oder relative Mengenanteile und optional weitere Parameter von Teilprodukten, wie beispielsweise Temperatur, Reihenfolge der Zubereitung von Teilprodukten, Name des Getränkes, Name des Benutzers, Zubereitungshinweise und -empfehlungen, Kapselpräferenz. Weitere Daten können Bestätigungseingaben sein, welche dem System anzeigen, dass der Benutzer eine angezeigte Benutzeranweisung ausgeführt hat. Von der Getränkezubereitungsmaschine an das Bediengerät können anzuzeigende Initialwerte für Mengenanteile, Benutzeranweisungen etc. übermittelt werden.

In einer Ausführungsform weist das System eine **Zusatzeinheit** auf, welche sowohl zum Zuführen von Milch als zweitem Teilprodukt, optional unter Erwärmen der Milch, als auch zum Bilden und Zuführen von Milchschaum als drittem Teilprodukt zum Gesamtprodukt ausgebildet ist.

Das **Computerprogramm** zur Ausführung auf dem Bediengerät ist in einen internen Speicher einer digitalen Datenverarbeitungseinheit des Bediengerätes ladbar und weist Computerprogrammcodemittel auf, welche, wenn sie in der digitalen Datenverarbeitungseinheit des Bediengerätes ausgeführt werden, diese zur Ausführung der für das Bediengerät vorgesehenen Schritte des oben beschriebenen Verfahrens bringen. Ein Computerprogrammprodukt weist einen Datenträger, respektive ein computerlesbares Medium auf, auf welchem die Computerprogrammcodemittel gespeichert sind.

In Ausführungsformen ist die Getränkezubereitungsmaschine mit einer **Zuführeinheit** ausgerüstet, welche automatisch Portionspackungen zuführen und in die Kapselaufnahme fördern kann. Die Zuführeinheit kann zum selektiven Zuführen von Portionspackungen unterschiedlichen Typs ausgerüstet sein. Es ist damit eine automatische Herstellung von Gesamtprodukten unterschiedlicher Art möglich. Dabei kann bei der Herstellung des Gesamtproduktes nach Massgabe der Zubereitungsvorschrift automatisch eine passende respektive mit der Zubereitungsvorschrift konsistente Portionspackung zugeführt werden.

In weiteren Ausführungsformen mit einer solchen Zuführeinheit können in der Getränkezubereitungsmaschine mehrere Empfangsschritte mit jeweils einem Auslösebefehl und einer zugeordneten Zubereitungsvorschrift ausgeführt werden. Diese können gespeichert und nacheinander in separaten Herstellungsschritten abgearbeitet werden. Optional wird jeweils nach Abschluss eines Herstellungsschrittes ein Abschlussbestätigungsschritt zur Meldung an den Benutzer ausgeführt. Vor Ausführung der einzelnen Herstellungsschritte können jeweils die Überprüfungsschritte und Bestätigungsschritte durchgeführt werden. Es kann zwischen Herstellungsschritten auch eine Benutzeranweisung gesendet werden, um den Benutzer aufzufordern, vor dem Beginn eines Herstellungsschrittes einen eben gefüllten Behälter durch einen leeren zu ersetzen.

Weitere bevorzugte Ausführungsformen gehen aus den abhängigen Patentansprüchen hervor. Dabei sind Merkmale der Verfahrensansprüche sinngemäss mit den Geräte-und Computerprogrammansprüchen kombinierbar und umgekehrt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: ein System zur Getränkezubereitung;
- Figuren 2-3: Flussdiagramme von Verfahren zum Betrieb der Getränkezubereitungsmaschine.

Grundsätzlich sind in den Figuren gleiche Teile mit gleichen Bezugszeichen versehen.

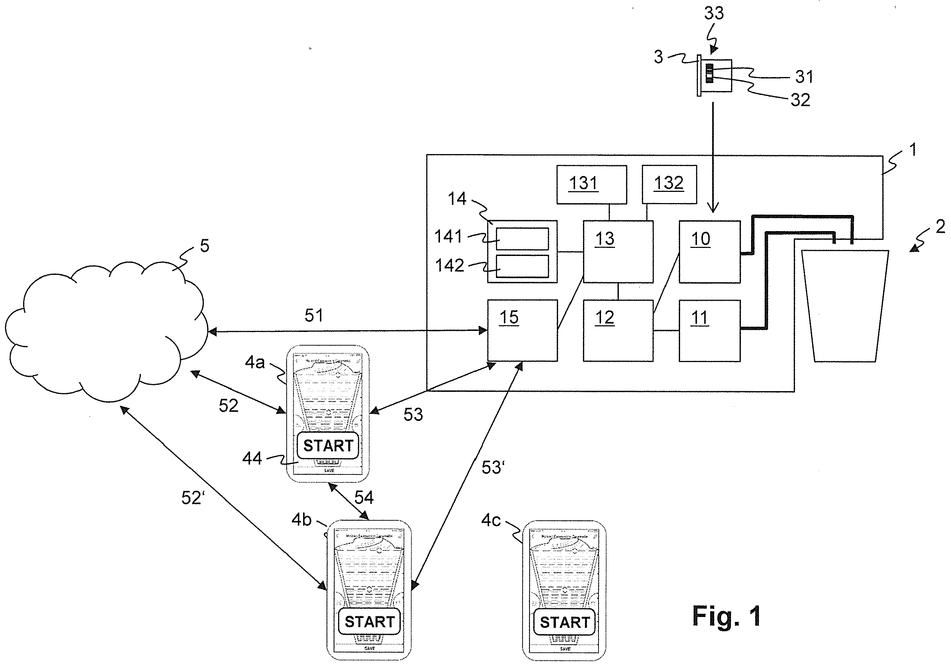

**Figur 1** zeigt ein **System** zur Getränkezubereitung mit einer Getränkezubereitungsmaschine 1 zum Befüllen eines Behälters 2 mit mindestens einem Extraktionsgut aus einer Portionspackung 3. Die Getränkezubereitungsmaschine 1 kann über eine erste Kommunikationsverbindung 51 mit einem Kommunikationsnetzwerk 5 wie einem Intranet oder dem Internet verbunden sein. Ein Bediengerät 4a, 4b, 4c, welches mobil und tragbar sein kann, beispielsweise ein Mobiltelefon oder Smartphone, oder ein dediziertes Gerät welches nur zur Bedienung der Getränkezubereitungsmaschine 1 vorgesehen ist, kann indirekt über eine zweite Kommunikationsverbindung 52, 52' und das Kommunikationsnetzwerk 5 oder direkt über eine dritte Kommunikationsverbindung 53, 53' mit der Getränkezubereitungsmaschine 1 kommunizieren. Zwei Bediengeräte 4a, 4b können über eine vierte Kommunikationsverbindung 54 miteinander kommunizieren, entweder bidirektional oder mindestens unidirektional, beispielsweise von einem ersten Bediengerät 4a zu einem zweiten Bediengerät 4b.

Die Getränkezubereitungsmaschine 1 weist eine **Grundeinheit** 10 zum Extrahieren eines **Extraktionsprodukts** mittels einer Extraktionsflüssigkeit auf. Die Getränkezubereitungsmaschine 1 ist beispielsweise eine Portionskapsel-Kaffeemaschine der an sich bekannten Art, wobei die Grundeinheit 10 ein Brühmodul und die Extraktionsflüssigkeit heisses und unter Druck stehendes Wasser ist. Das Extraktionsprodukt wird dem Behälter 2 zugeführt.

Die **Portionspackung** 3 weist eine Portionsverpackung (bspw. Kapsel) und ein in der Portionsverpackung enthaltenes Extraktionsgut (bspw. Kaffee) auf.

Die Getränkezubereitungsmaschine 1 weist eine **Zusatzeinheit** 11 auf, welche mindestens ein weiteres **Produkt** oder **Teilprodukt** fordern oder erzeugen kann, beispielsweise Milch und/oder Milchschaum, welche ebenfalls dem Behälter 2 zugeführt werden. Die Zusatzeinheit 11 kann Heizelemente und/oder Kühlelemente zum Aufheizen oder Abkühlen des mindestens einen weiteren Produktes aufweisen.

Das Extraktionsprodukt und das mindestens eine Teilprodukt werden gleichzeitig oder sequentiell dem Behälter 2 zugeführt und bilden zusammen im Behälter 2 ein Gesamtprodukt, beispielsweise einen "Caffe Macchiato" bestehend aus Kaffee, kalter oder warmer Milch, und kaltem oder warmem Milchschaum. Ein Gesamtprodukt ist schematisch als bestehend aus einem ersten Anteil 21, einem zweiten Anteil 22 und einem dritten Anteil 23 bestehend dargestellt. Die Anteile können je nach Zubereitungsvorschrift im Behälter 2 übereinander geschichtet oder gemischt sein. Unter "Anteil" wird ein Volumenanteil oder Mengenanteil verstanden.

Die Getränkezubereitungsmaschine 1 weist zur Steuerung der Grundeinheit 10 und der Zusatzeinheit 11, zur Bedienung durch einem Benutzer und zur optionalen Kommunikation mit anderen Geräten eine Steuereinheit 12, eine übergeordnete Steuereinheit 13, eine Bedieneinheit 14 und eine Kommunikationseinheit 15 auf.

Die **Steuereinheit** 12 ist zur Ansteuerung der Grundeinheit 10 und Zusatzeinheit 11 eingerichtet, beispielsweise indem sie die Pumpen Ventile, Heizelemente etc. dieser Einheiten ansteuert und Messwerte von Temperaturen, Drücken, Durchfluss etc. erfasst und verarbeitet. Die Funktion der Steuereinheit 12 kann durch eine einzige physische elektronische Einheit, beispielsweise einen Mikrokontroller, realisiert werden, oder durch mehrere physikalische Einheiten oder Mikrokontroller, welche jeweils der Grundeinheit 10 und der Zusatzeinheit 11 zugeordnet sind und miteinander über einen Kommunikationsbus kommunizieren oder über Signalleitungen einzelne analoge oder binäre Signale übermitteln.

Die **übergeordnete Steuereinheit** 13 ist zur Ansteuerung der Bedieneinheit 14 und er Kommunikationseinheit 15 eingerichtet. Die übergeordnete Steuereinheit 13 kann physikalisch und/oder programmtechnisch getrennt von der Steuereinheit 12 realisiert sein, oder aber zusammen mit der Steuereinheit 12 eine einzige Einheit bilden. In diesem Sinne können gemäss Ausführungsformen die Steuereinheit 12 und die übergeordnete Steuereinheit 13 identisch sein.

Die **Bedieneinheit** 14 weist eine Eingabeeinheit 141, mit beispielsweise Schaltern, Tastern und/oder einer Jog-Dial oder Einstellrad und/oder einer berührungsempfindlichen Fläche auf, sowie eine Ausgabeeinheit 142 mit optischen Anzeigemitteln wie Leuchten oder einem Bildschirm etc. und/oder akustischen Anzeigemitteln wie einem Lautsprecher, Summer, etc..

Die **Kommunikationseinheit** 15 ist zur Kommunikation über die erste Kommunikationsverbindung 51, die drahtlos (beispielsweise mittels Wi-Fi, Bluetooth, etc.) oder drahtgebunden (beispielsweise mittels Ethernet, USB) sein kann, eingerichtet, insbesondere zur Kommunikation mit dem Kommunikationsnetzwerk 5. Ferner kann die Kommunikationseinheit 15 drahtlos (beispielsweise mittels Wi-Fi, Bluetooth, NFC, etc.) oder drahtgebunden (beispielsweise mittels USB) mit dem Bediengerät 4 kommunizieren. Die Kommunikationseinheit 15 kann auch zum Auslesen und Beschreiben eines entfernbaren portablen Datenträgers eingerichtet sein, beispielsweise über eine USB-Schnittstelle oder SD-Kartensclmittstelle.

Es können eines oder mehrere Bediengeräte 4a, 4b, 4c vorliegen. Ein solches **Bediengerät** 4, typischerweise ein Mobiltelefon oder Smartphone, weist ein Benutzerinterface 44 auf, beispielsweise einen berührungsempfindlichen Bildschirm oder Touchscreen, welcher als Ein- und Ausgabeeinheit funktioniert. Zusätzlich oder alternativ können auch Taster des Bediengerätes 4 als Eingabeeinheiten dienen. Zusätzlich oder alternativ kann eine Spracheingabe realisiert sein.

Wo nicht anders erwähnt, können Informationen an den Benutzer und Eingaben des Benutzers über die Bedieneinheit 14 und/oder das Bediengerät 4 ausgegeben respektive eingegeben werden. Wenn in der vorliegenden Beschreibung also Interaktionen mit dem Benutzer beschrieben sind, versteht sich, dass damit Ausgaben respektive Eingaben mittels der Bedieneinheit 14 und/oder mittels des Bediengerätes 4 gemeint sind. Verallgemeinert können diese daher als Interfaceeinheit bezeichnet werden.

Die übergeordnete Steuereinheit 13 weist einen Speicher 131 auf, in welchem unter anderem **Zubereitungsvorschriften** oder Rezepte gespeichert sind. Eine Zubereitungsvorschrift weist mindestens **Steuerinformationen** auf, die in Befehle zur Steuerung der Grundeinheit 10 und der Zusatzeinheit 11 umgesetzt werden können. Solche Steuerinformationen weisen einerseits **Ablaufinformationen** auf, welche einen Ablauf von Schritten spezifizieren, die durch die Grundeinheit 10 und/oder die Zusatzeinheit 11 zum Erzeugen eines Gesamtprodukte auszuführen sind. Andererseits weisen die Steuerinformationen beispielsweise Temperaturen, Volumenangaben, Zeitangaben, etc. auf - im Folgenden allgemein auch **Zubereitungsparameter** genannt - welche einen Ablauf parametrisieren.

Ablaufinformationen repräsentieren beispielsweise "Heizung der Zusatzeinheit einschalten; Pumpe des Brühmoduls während fünfzehn Sekunden einschalten; nach Abschalten der Pumpe mindestens fünf Sekunden warten bis Heizung auf Solltemperatur ist; Milchpumpe während zwölf Sekunden einschalten". Die in diesem Beispiel erwähnten Zeiten und Temperaturen können durch Zubereitungsparameter spezifiziert sein und/oder durch die Steuerung nach Massgabe von ändern Zubereitungsparametern und Sensormesswerten bestimmt werden.

Eine Zubereitungsvorschrift kann auch **Benutzeranweisungen** enthalten. Diese Anweisungen sind Teil der Zubereitung des Gesamtproduktes und müssen durch einen Benutzer ausgeführt werden. Dazu können die Benutzeranweisungen mittels der Ausgabeeinheit 142 oder des Benutzerinterface 44 des Bediengerätes 4 angezeigt werden. Beispielsweise sind solche Benutzeranweisungen "Jetzt Eiswürfel hinzufügen" oder "Bitte 20ml Karamelsirup abmessen" oder "Jetzt den vorbereiteten Karamelsirup hinzufügen" oder "Bitte umrühren" oder "Bitte überprüfen, ob eingelegte Kapsel und angewähltes Rezept zusammenpassen" etc. Eine Benutzeranweisung kann von einer visuellen Darstellung begleitet sein, beispielsweise des herzustellenden Gesamtproduktes, einer ausgewählten oder einer tatsächlich eingelegten Kapsel etc.

**Zur Zubereitung eines Produktes** werden entsprechend der Zubereitungsvorschrift Steuerinformationen respektive entsprechende Befehle durch die Grundeinheit 10 und Zusatzeinheit 11 umgesetzt und damit ein Zubereitungsablauf realisiert. Falls Zubereitungsvorschrift Benutzeranweisungen aufweist, werden diese an entsprechenden Stellen des Ablaufs dem Benutzer angezeigt. Nach einer Quittierung durch den Benutzer mittels der Eingabeeinheit 141 oder dem Benutzerinterface 44, welche dem System die Ausführung der Benutzeranweisung bestätigt, werden nachfolgende Steuerinformationen des Zubereitungsablaufs umgesetzt.

Eine Zubereitungsvorschrift kann Zubereitungsparameter aufweisen, die durch den Benutzer angepasst werden dürfen, sowie Zubereitungsparameter, die nicht durch den Benutzer anpassbar sind. **Anpassbare Zubereitungsparameter** sind beispielsweise (Volumen)Anteile von Teilprodukten im Gesamtprodukt, eine Gesamtmenge, oder die Temperatur eines Teilproduktes. Für anpassbare Zubereitungsparameter kann die Zubereitungsvorschrift einen Standardwert oder Defaultwert enthalten, welcher verwendet wird, wenn der Benutzer den Parameter nicht anpasst.

Zur Anpassung von anpassbaren Zubereitungsparametern wird dem Benutzer auf der Bedieneinheit 14 der Getränkezubereitungsmaschine 1 oder dem Benutzerinterface 44 des Bediengerätes 4 eine Auswahl eines oder mehrere solcher Zubereitungsparameter angezeigt und wird eine Eingabe des Benutzers zur Anpassung des Zubereitungsparameters erfasst. Die Eingabe kann durch Betätigen von realen Tastern und/oder von virtuellen Tastern wie Schaltflächen oder "Buttons", insbesondere "Pfeiltasten" und/oder von verschiebbaren Markierungen oder "Slider" auf einem Touchscreen der Bedieneinheit 14 oder des Bediengerätes 4 erfolgen.

Das Bediengerät 4 übermittelt Informationen, welche die erfassten Benutzereingaben wie Mengenanteile, Wahl des Behälters oder Gesamtmenge, Temperaturwahl etc. repräsentieren, direkt über die dritte Kommunikationsverbindung 53 oder indirekt über die zweite Kommunikationsverbindung 52 und die erste Kommunikationsverbindung 51 an die Getränkezubereitungsmaschine 1.

Die Portionspackung 3 ist mit einem maschinenlesbaren Portionencode 33 versehen. Dieser kann durch beispielsweise optisch, mechanisch oder drahtlos über Funk lesbare Informationsträger realisiert sein, oder durch eine Kombination von zwei oder mehr solcher Informationsträger. Der Portionencode 33 repräsentiert eine Portionenkategorie 31, welche eine Kategorie spezifiziert, welcher die Portionspackung 3 zugeordnet ist. Solche Kategorien können verschiedene Kategorien von Getränken oder Produkten sein, wie "Espresso", "Normalkaffee", "Filterkaffee", "Tee", und auch "Reinigungskapsel". Der Portionencode 33 repräsentiert ferner eine Portionenidentität 32, welcher die Portionspackung 3 zugeordnet ist. Solche Identitäten können bestimmte Einzelprodukte oder Sorten repräsentieren, wie "Arabica Nr. 42" oder "Colombia special". Portionspackungen 3 mit derselben Portionenkategorie 31 können unterschiedliche Portionenidentitäten 32 aufweisen. Mittels der Portionenkategorie 31 können also Portionspackungen 3 respektive entsprechende Produkte unterschiedlicher Identität zu Kategorien gruppiert werden.

Es kann in der Getränkezubereitungsmaschine 1 eine Zuordnung des Portionencodes 33, respektive von Portionenkategorien 31 und/oder Portionenidentitäten 32, zu jeweils empfohlenen oder zulässigen Bereichen für Zubereitungsparameter gespeichert sein. Damit kann nach dem Einlegen einer Portionspackung 3 anhand des Portionencodes 33 automatisch geprüft werden, ob die Portionspackung 3 mit den vom Benutzer vorgegebenen Mengenanteilen kompatibel ist und/oder ob die Portionspackung 3 mit einer vom Benutzer gewählten Zubereitungsvorschrift konsistent ist, also nicht für diese Zubereitungsvorschrift geeignet ist. Ist dies nicht der Fall, kann eine Warnung angezeigt werden und/oder die weitere Verarbeitung der Portionspackung 3 gestoppt werden. Alternativ kann auch eine positive Meldung generiert werden, wenn die gewählte Kapsel sich für die gewählten Mengenanteile besonders gut eignet. Beispielsweise ist eine Espresso-Kapsel nicht optimal geeignet, wenn durch den Benutzer eine für einen normalen Kaffee vorgesehene Kaffeemenge gewählt wurde. Auch sind eine Reinigungskapsel oder eine Teekapsel grundsätzlich nicht geeignet, wenn die Zubereitung eines Getränkes mit Milch gewählt wurde.

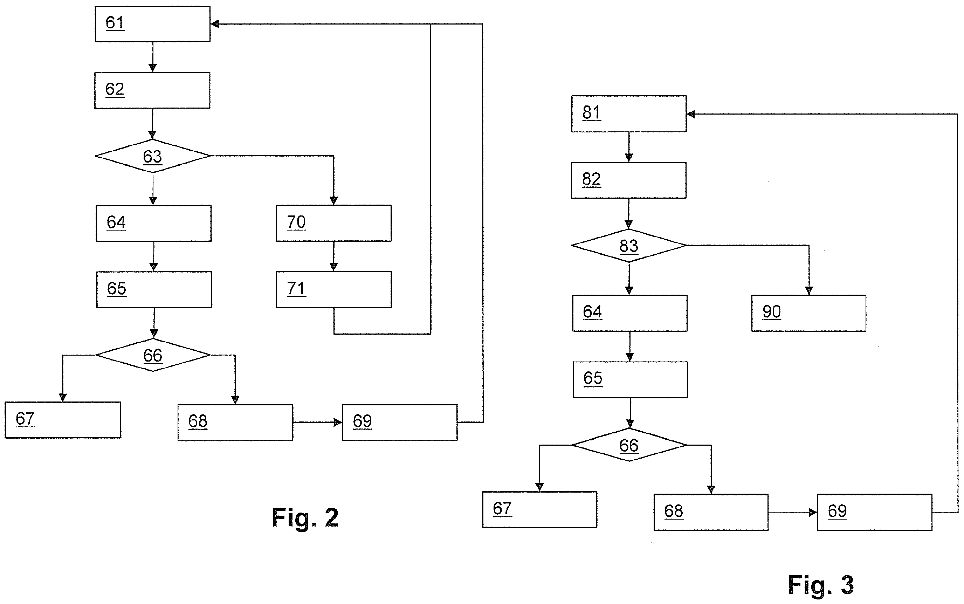

**Figur 2** zeigt ein Flussdiagramm eines Ablaufs eines Verfahrens zum Betrieb der Getränkezubereitungsmaschine 1. Diese Verfahren stellt die Ausführbarkeit eines Herstellungsprozesses sicher. Wo nichts anders angegeben ist, werden die Schritte durch die Getränkezubereitungsmaschine selber ausgeführt. Die Schritte sind die Folgenden:
- Empfangsschritt 61: eine drahtlose Kommunikationseinheit 15 der Getränkezubereitungsmaschine 1 empfängt einen Auslösebefehl.
- Überprüfungsschritt 62: es wird überprüft, ob die Getränkezubereitungsmaschine 1 zum Herstellen des Gesamtproduktes bereit ist.
- Verzweigung 63, je nachdem, ob die Getränkezubereitungsmaschine 1 bereit ist oder nicht.
- **Falls** die Getränkezubereitungsmaschine 1 bereit ist:
   - Bestätigungsschritt 64 zum Senden, durch die Kommunikationseinheit 15, einer Bestätigung, dass der Auslösebefehl empfangen wurde und die Getränkezubereitungsmaschine 1 zum Herstellen des Gesamtproduktes bereit ist;
   - Herstellungsschritt 65, in welchem die Herstellung des Gesamtproduktes durch die Getränkezubereitungsmaschine 1 stattfindet;
   - Zweite Verzweigung 66, je nachdem, ob die Herstellung fehlerfrei verlaufen ist.
   - **Falls** die Herstellung fehlerfrei verlaufen ist,
      - Abschlussbestätigungsschritt 67, in welchem durch die Kommunikationseinheit 15, eine Abschlussbestätigung gesendet wird, dass das Herstellen des Gesamtproduktes abgeschlossen ist. Das Bediengerät 4 erzeigt eine entsprechende Anzeige für den Benutzer. Die Implementation des Abschlussbestätigungsschrittes 67 kann in verschiedener Weise geschehen, beispielsweise durch ein "push"-Verfahren, in welchem die Getränkezubereitungsmaschine 1 aktiv eine Nachricht an das Bediengerät 4 sendet, oder mittels eines "polling"-Verfahrens, in welchem das Bediengerät 4 den Status der Getränkezubereitungsmaschine 1 wiederholt abfragt.
   - **Falls** die Herstellung **nicht** fehlerfrei verlaufen ist,
      - Herstellungsfehlermeldungsschritt 68, in welchem durch die Kommunikationseinheit 15, eine Herstellungsfehlermeldung gesendet wird, dass beim Herstellen des Gesamtproduktes ein Fehler aufgetreten ist. Die Herstellungsfehlermeldung kann Informationen über die Art des Fehlers und/oder dessen Behebung enthalten oder auf solche Informationen verweisen, die beispielsweise im Bediengerät 4 gespeichert sind und angezeigt werden.
      - Herstellungsfehlerbehebungsschritt 69, in welchem durch einen Benutzer anhand der Herstellungsfehlenmeldung eine Fehlerbehebung vorgenommen werden kann.
      - Weiterführung des Verfahrens mit dem Empfangsschritt, nachdem der Benutzer mittels der Bediengerät 4 erneut einen Auslösebefehl gesendet hat.
- **Falls** die Getränkezubereitungsmaschine 1 **nicht** bereit ist:
   - Fehlerinformationsschritt 70 in welchem durch die Kommunikationseinheit 15, eine Fehlerinformation gesendet wird, mit einer Bestätigung, dass der Auslösebefehl empfangen wurde aber die Getränkezubereitungsmaschine 1 zum Herstellen des Gesamtproduktes **nicht** bereit ist. Die Fehlerinformation hängt von der Art des Überprüfungsschrittes ab, der dies festgestellt hat. Sie kann sich auf das Fehlen von Komponenten und/oder einer Zusatzeinheit beziehen, oder auf einen Betriebszustand der Getränkezubereitungsmaschine oder auf Inkonsistenzen zwischen Zubereitungsvorschrift und dem aktuellen Zustand der Getränkezubereitungsmaschine.
   - Fehlerbehebungsschritt 71, in welchem durch einen Benutzer anhand der Fehlerinformation eine Fehlerbehebung und/oder eine Anpassung der Zubereitungsvorschrift vorgenommen werden kann.
   - Weiterführung des Verfahrens mit dem Empfangsschritt, nachdem der Benutzer mittels der Bediengerät 4 erneut einen Auslösebefehl gesendet hat.

**Figur 3** zeigt ein Flussdiagramm eines Ablaufs eines Verfahrens zum Betrieb der Getränkezubereitungsmaschine 1. Diese Verfahren stellt die Autorisierung zur Ausführung eines Herstellungsprozesses sicher. Wo nichts anders angegeben ist, werden die Schritte durch die Getränkezubereitungsmaschine selber ausgeführt. Die Schritte sind die Folgenden:
- Empfangsschritt 81: eine drahtlose Kommunikationseinheit 15 der Getränkezubereitungsmaschine 1 empfängt einen Auslösebefehl und zugeordnete Authentifizierungsinformation. Die Authentifizierungsinformation kann als Schlüssel übermittelt werden. Alternativ kann die Authentifizierungsinformation durch ein mehrschrittiges Verfahren unter Austausch von Nachrichten zwischen der Getränkezubereitungsmaschine 1 und einem Bediengerät 4 ermittelt werden.
- Überprüfungsschritt 82: es wird anhand der Authentifizierungsinformation überprüft, ob der Auslösebefehl von einem Bediengerät 4a, 4b, 4c stammt, welches zum Auslösen dieser bestimmten Aktion in der Getränkezubereitungsmaschine 1, insbesondere dem Fern-Auslösen einer Herstellung berechtigt ist. Beispielsweise geschieht dies, indem anhand der Authentifizierungsinformation eine in der Getränkezubereitungsmaschine 1 gespeicherte Berechtigung ermittelt wird, welche spezifiziert, ob eine bestimmte Aktion, insbesondere das Auslösen eines Herstellungsschrittes, ausgelöst werden darf.
- Verzweigung 83, je nachdem, ob das Bediengerät 4a, 4b, 4c berechtigt ist oder nicht.
- **Falls** das Bediengerät 4a, 4b, 4c berechtigt ist:
   - Bestätigungsschritt 64 (optional), Herstellungsschritt 65, und nachfolgende Schritte, wie bereits bezüglich Fig. 2 beschrieben.
- **Falls** das Bediengerät 4a, 4b, 4c **nicht** berechtigt ist:
   - Berechtigungsfehlerschritt 90 in welchem durch die Kommunikationseinheit 15, eine Fehlerinformation gesendet wird, dass der Auslösebefehl empfangen wurde aber das Bediengerät 4a, 4b, 4c zum Auslösen dieser bestimmten Aktion, insbesondere dem Fern-Auslösen der Herstellung, **nicht** bereit ist. Diese Fehlerinformation kann am Bediengerät 4 angezeigt werden.

Die Verfahren gemäss den **Figuren 2** und **3** können miteinander kombiniert werden. Beispielsweise werden aus **Figur 2**
- der Überprüfungsschritt 62, ob die Getränkezubereitungsmaschine 1 zum Herstellen des Gesamtproduktes bereit ist und
- die anschliessende Verzweigung 63,
in die **Figur 3** zwischen
- die Verzweigung 83 und
- den Bestätigungsschritt 64 (optional) oder den Herstellungsschritt 65 eingefügt.

Es können unterschiedliche Stufen von Berechtigungen vorliegen. Beispielsweise ist in der Konfiguration der Figur 1 dem ersten Bediengerät 4a eine obere Berechtigung (oder "Administrator-Berechtigung") zugeordnet, welche erlaubt, einen Herstellungsvorgang in der Getränkezubereitungsmaschine 1 auszulösen. Das dritte Bediengerät 4c hat diese Berechtigung nicht, sondern nur eine "untere Berechtigung" oder "User-Berechtigung". Mit dieser können Zubereitungsvorschriften (Rezepte) angepasst und an die Getränkezubereitungsmaschine 1 übermittelt werden, das Auslösen der Herstellung muss aber an der Getränkezubereitungsmaschine 1 selber stattfinden, d.h. durch Betätigen eines Bedienungselementes an der Bedieneinheit 14 der Getränkezubereitungsmaschine 1. Damit kann sichergestellt werden, dass nicht ein beliebiger Benutzer unkontrolliert einen Herstellungsprozess auslösen kann.

Dem zweiten Bediengerät 4b kann eine mittlere Berechtigung (oder "Sub-Administrator") zugeordnet sein. Diese mittlere Berechtigung erlaubt das Auslösen der Herstellung eines Produktes durch dieses zweite Bediengerät 4b.

Die Zuordnung einer mittleren Berechtigung zu einem Bediengerät 4 kann nur mittels eines Bediengerätes 4 geschehen, welchem eine obere Berechtigung zugordnet ist. Das erste Bediengerät 4a mit der oberen Berechtigung kann somit einem anderen, beispielsweise dem zweiten Bediengerät 4b, eine mittlere Berechtigung zuordnen. Dies kann realisiert werden, indem das erste Bediengerät 4a dem zweiten Bediengerät 4b einen Schlüssel oder allgemein eine Authentifizierungsinformation zuordnet, wobei dieser Authentifzierungsinformation im Getränkezubereitungsmaschine 1 eine mittlere Berechtigung zugeordnet ist. Diese Authentifizierungsinformation wird dem zweiten Bediengerät 4b vom ersten Bediengerät 4a übermittelt. Vorzugsweise geschieht dies, zur Abhörsicherheit, über die vierte Kommunikationsverbindung 54, welche einen anderen Kanal ist, als der Kanal, über welchen die Bediengeräte 4 mit der Getränkezubereitungsmaschine 1 kommunizieren. Dieser andere Kanal ist vorzugsweise auf eine Übermittlung nur im Nahbereich ausgelegt, beispielsweise gemäss einem NFC-Standard oder Bluetooth-Standard, im Gegensatz zu einem WiFi-Standard zur Kommunikation mit der Getränkezubereitungsmaschine 1. Der andere Kanal kann auch unidirektional sein, beispielsweise durch ein optisches Signal wie ein Barcode oder Morsecode, der vom ersten Bediengerät 4 ausgegeben und vom zweiten Bediengerät 4b empfangen respektive gescannt wird.

Die Authentifizierungsinformation, welche der zweiten Bediengerät 4b zugeordnet ist, kann für jedes der Bediengeräte 4 eineindeutig sein:
- Entweder als Kombination eines gemeinsamen Administratorschlüssels mit einer individuellen Identifikationsschlüssel, der jeweils nur das Bediengerät 4 identifiziert aber nicht einer Berechtigung entspricht. Dann kann zum Bestimmen der Berechtigung zum Auslösen eines Herstellungsprozesses in der Getränkezubereitungsmaschine 1 untersucht werden, ob der Administratorschlüssel für die Getränkezubereitungsmaschine 1 gültig ist. Zum Bestimmen, ob ein Bediengerät 4a eine obere Berechtigung aufweist, wird dann der Identifikationsschlüssel verwendet. Beim Einrichten einer Getränkezubereitungsmaschine 1 kann festgelegt werden, dass ausschliesslich das erste Bediengerät 4a, das zum Einrichten verwendet wird, diese obere Berechtigung aufweist. Dann kann zum Vergeben einer mittleren Berechtigung nur der Administratorschlüssel an das zweite Bediengerät 4b übermittelt werden. Das zweite Bediengerät 4b kann somit, weil es eine anderen Identifikationsschlüssel als das erste aufweist, keine obere Berechtigung haben und kann keine Berechtigungen modifizieren.
- Oder es kann ein kombinierter Schlüssel vorliegen, welcher sowohl die Identität als auch die Berechtigung eines Bediengerätes 4 codiert. Dann ist in der Getränkezubereitungsmaschine 1 jedem solchen kombinierten Schlüssel eine Berechtigung zugeordnet, welche die Berechtigung zum Auslösen eines Herstellungsprozesses und auch jene zum Vergeben von (mittleren) Berechtigungen an andere Bediengeräte 4 angibt. Dann wird beim Vergeben einer mittleren Berechtigung der kombinierte Schlüssel dem zweiten Bediengerät 4b übermittelt, und in der Getränkezubereitungsmaschine 1 die Zuordnung des kombinierten Schlüssels mit einer mittleren Berechtigung gespeichert.

Allgemein gilt, dass die verschiedenen Schlüssel oder Authentifizierungsinformation nicht vom ersten Bediengerät 4a aus gesendet und in diesem erzeugt werden müssen. Relevant ist, dass die Authentifizierungsinformationen geteilt werden. Dabei wird das Erzeugen eines Schlüsselpaares aus einem privaten und einem öffentlichen Schlüssel auch als "Teilen der Authentifizierungsinformationen" bezeichnet.

Die Übermittlung von Authentifizierungsinformation kann, unter Verwendung entsprechender kryptographischer Verfahren auch über ein öffentliches Kommunikationsnetzwerk 5 geschehen.

## Patentansprüche

1. Verfahren zum Betrieb einer Getränkezubereitungsmaschine (1), zur Herstellung eines Gesamtproduktes unter Verwendung einer Portionspackung (3), wobei die Getränkezubereitungsmaschine (1) eine zur drahtlosen Kommunikation ausgebildete Kommunikationseinheit (15) aufweist, wobei das Verfahren die folgenden durch die Getränkezubereitungsmaschine (1) ausgeführten Schritte aufweist:
• einen Empfangsschritt (61) zum Empfangen, durch die Kommunikationseinheit (15), eines Auslösebefehls;
• einen Überprüfungsschritt (62) zum Überprüfen, ob die Getränkezubereitungsmaschine (1) zum Herstellen des Gesamtproduktes bereit ist;
und, falls die Getränkezubereitungsmaschine (1) zum Herstellen des Gesamtproduktes **bereit** ist:
• einen Bestätigungsschritt (64) zum Senden, durch die Kommunikationseinheit (15), einer Bestätigung, dass der Auslösebefehl empfangen wurde und die Getränkezubereitungsmaschine (1) zum Herstellen des Gesamtproduktes bereit ist;
• einen Herstellungsschritt (65) zum Herstellen des Gesamtproduktes.

2. Verfahren gemäss Anspruch 1, wobei der Überprüfungsschritt (62) einen oder mehreren der folgenden Unter-Überprüfungsschritte zur Überprüfung des Vorhandenseins von Komponenten des Gesamtproduktes aufweist:
• Überprüfen, ob eine Portionspackung (3) zur Herstellung des Gesamtproduktes vorhanden ist;
• Überprüfen, ob eine Mindestmenge von Wasser vorhanden ist.

3. Verfahren gemäss einem der vorangehenden Ansprüche, wobei der Überprüfungsschritt (62) einen oder mehreren der folgenden Unter-Überprüfungsschritte aufweist:
• Überprüfen, ob eine Zusatzeinheit (11) zum Zuführen eines Teilproduktes, insbesondere Milch, zum Gesamtprodukt, an die Getränkezubereitungsmaschine (1) angeschlossen und betriebsbereit ist;
• Überprüfen, ob eine ausreichende Menge eines Teilproduktes, insbesondere Milch, vorhanden ist.

4. Verfahren gemäss einem der vorangehenden Ansprüche, wobei der Überprüfungsschritt (62) einen oder mehreren der folgenden Unter-Überprüfungsschritte zur Überprüfung eines Betriebszustandes der Getränkezubereitungsmaschine (1) aufweist:
• Überprüfen, ob die Getränkezubereitungsmaschine (1) zur Herstellung des Gesamtproduktes bereit ist;
• Überprüfen, ob keine Fehlermeldungen der Getränkezubereitungsmaschine (1) vorliegen.

5. Verfahren gemäss einem der vorangehenden Ansprüche, wobei der Überprüfungsschritt (62) den folgenden Unter-Überprüfungsschritt zur Überprüfung eines Betriebszustandes der Getränkezubereitungsmaschine (1) aufweist:
• Überprüfen, ob ein Behälter (2) zur Aufnahme des Gesamtproduktes vorhanden ist.

6. Verfahren gemäss einem der vorangehenden Ansprüche, wobei der Überprüfungsschritt (62) einen oder mehreren der folgenden Unter-Überprüfungsschritte nach Massgabe einer Zubereitungsvorschrift, auf welche der Auslösebefehl sich bezieht, aufweist:
• Überprüfen, ob eine Identität oder eine Kategorie einer Portionspackung (3), welche in der Getränkezubereitungsmaschine (1) zur Herstellung des Gesamtproduktes bereit steht, konsistent mit der Zubereitungsvorschrift ist;
• Überprüfen, für mindestens eine Komponente des Gesamtproduktes, ob eine ausreichende Menge dieser Komponente zur Herstellung des Gesamtproduktes nach Massgabe der Zubereitungsvorschrift vorhanden ist.

7. Verfahren gemäss einem der vorangehenden Ansprüche, welches die folgenden durch die Getränkezubereitungsmaschine (1) ausgeführten Schritte aufweist, falls die Getränkezubereitungsmaschine (1) **nicht** zum Herstellen des Gesamtproduktes **bereit** ist:
• einen Fehlerinformationsschritt (70) zum Senden, durch die Kommunikationseinheit (15), einer Fehlerinformation, dass der Auslösebefehl empfangen wurde und die Getränkezubereitungsmaschine (1) zum Herstellen des Gesamtproduktes **nicht** bereit ist.

8. Verfahren gemäss einem der vorangehenden Ansprüche, wobei der Herstellungsschritt (65) mit einer vorgebbaren zeitlichen Verzögerung nach dem Empfangsschritt (61) oder dem Bestätigungsschritt (64) ausgeführt wird, insbesondere mit einer zeitlichen Verzögerung, die durch eine über die Kommunikationseinheit (15) empfangene Nachricht spezifiziert ist.

9. Verfahren gemäss einem der vorangehenden Ansprüche, aufweisend, als weiteren Schritt, einen Abschlussbestätigungsschritt (67) zum Senden, durch die Kommunikationseinheit (15), einer Abschlussbestätigung, dass das Herstellen des Gesamtproduktes abgeschlossen ist.

10. Verfahren gemäss einem der vorangehenden Ansprüche, aufweisend, als weiteren Schritt, einen Herstellungsfehlermeldungsschritt (68) zum Senden, durch die Kommunikationseinheit (15), einer Herstellungsfehlermeldung, dass beim Herstellen des Gesamtproduktes ein Fehler aufgetreten ist.

11. Verfahren gemäss einem der vorangehenden Ansprüche, welches die folgenden durch die Getränkezubereitungsmaschine (1) ausgeführten Schritte aufweist:
• Speichern einer Zubereitungsvorschrift, auf welche der Auslösebefehl sich bezieht, in der Getränkezubereitungsmaschine (1);
• Herstellen des Gesamtproduktes gemäss dieser gespeicherten Zubereitungsvorschrift zu einem späteren Zeitpunkt, insbesondere nach Empfang einer Fehlerbehebungsmeldung in der Getränkezubereitungsmaschine (1).

12. Verfahren gemäss einem der Ansprüche 1-10, welches die folgenden durch die Getränkezubereitungsmaschine (1) ausgeführten Schritte aufweist:
• Speichern einer Zubereitungsvorschrift, auf welche der Auslösebefehl sich bezieht, in der Getränkezubereitungsmaschine (1);
• einen Empfang einer abgeänderten Zubereitungsvorschrift, oder einen Empfang von Daten, welche Änderungen der gespeicherten Zubereitungsvorschrift beschreiben und damit eine abgeänderte Zubereitungsvorschrift definieren;
• eine erneute Durchführung des Empfangsschrittes und Überprüfungsschrittes unter Berücksichtigung der abgeänderten Zubereitungsvorschrift; und
falls die Getränkezubereitungsmaschine (1) zum Herstellen des Gesamtproduktes bereit ist;
• des Bestätigungsschrittes und
• des Herstellungsschrittes.

13. Verfahren gemäss einem der vorangehenden Ansprüche, aufweisend die vor dem Empfangsschritt ausgeführten Schritte
• Eingabe eines Auslöseentscheides durch einen Benutzer;
• Anzeigen einer Widerrufsoption am Bediengerät (4);
• Falls ein Widerrufentscheid durch den Benutzer eingegeben wird, Abbruch des Verfahrens; oder, falls kein Widerrufentscheid durch den Benutzer eingegeben wird, Weiterführung des Verfahrens.

14. **Getränkezubereitungsmaschine** (1), ausgebildet zur Ausführung des Verfahrens gemäss einem der Ansprüche 1 bis 12.

15. **Verfahren** zum Betrieb eines **Bediengerätes** (4) zur Interaktion mit einem Benutzer und zur drahtlosen Kommunikation mit einer Getränkezubereitungsmaschine (1), wobei das Verfahren die folgenden durch das Bediengerät (4) ausgeführten Schritte aufweist:
• Senden eines Auslösebefehls falls ein Benutzer am Bediengerät (4) eine Eingabe eines Auslöseentscheides vornimmt;
• Empfangen einer Bestätigung, dass der Auslösebefehl empfangen wurde, mit einer Information, ob die Getränkezubereitungsmaschine (1) zum Herstellen eines Gesamtproduktes bereit ist;
• Anzeige einer Bestätigungsanzeige am Bediengerät (4), nach Massgabe der empfangenen Bestätigung.

16. Verfahren gemäss Anspruch 15, aufweisend die folgenden durch das Bediengerät (4) ausgeführten Schritte:
• Empfangen einer Fehlerinformation;
• Anzeige einer Fehleranzeige am Bediengerät (4), nach Massgabe der empfangenen Fehlerinformation.

17. Verfahren gemäss Anspruch 15 oder 16, aufweisend den folgenden durch das Bediengerät (4) ausgeführten Schritt:
• Senden einer Nachricht, welche eine zeitliche Verzögerung zur Ausführung eines Herstellungsschrittes spezifiziert.

18. Verfahren gemäss einem der Ansprüche 15-17, aufweisend den folgenden durch das Bediengerät (4) ausgeführten Schritt:
• Senden einer abgeänderten Zubereitungsvorschrift, oder Senden von Daten, welche Änderungen einer Zubereitungsvorschrift beschreiben und damit eine abgeänderte Zubereitungsvorschrift definieren.

19. Verfahren gemäss der Ansprüche 15-18, aufweisend die folgenden durch das Bediengerät (4) ausgeführten Schritte,
• Eingabe eines Auslöseentscheides durch einen Benutzer;
• Anzeigen einer Widerrufsoption am Bediengerät (4);
• Falls ein Widerrufentscheid durch den Benutzer eingegeben wird, Abbruch des Verfahrens; oder, falls kein Widerrufentscheid durch den Benutzer eingegeben wird, Weiterführung des Verfahrens.

20. **Computerprogramm** zum Betrieb eines **Bediengerätes** (4) zur Interaktion mit einem Benutzer und zur drahtlosen Kommunikation mit einer Getränkezubereitungsmaschine (1), wobei das Computerprogramm bei Ausführung auf dem Bediengerät (4) das Verfahren gemäss einem der Ansprüche 14 bis 19 ausführt.
